# FASCICULE DE BREVET EUROPEEN

(11) **EP 3 047 550 B1**
(45) Date de publication et mention de la délivrance du brevet: **03.04.2019**
(21) Numéro de dépôt: 14789383.8
(22) Date de dépôt: 17.09.2014
(51) Int. Cl.: H01T 1/22, E21B 28/00, G01V 1/157

(54) **ÉCLATEUR D'UN DISPOSITIF DE GÉNÉRATION D'ARC ÉLECTRIQUE ET DISPOSITIF DE GÉNÉRATION D'ARC ÉLECTRIQUE CORRESPONDANT**
FUNKENSTRECKE EINER ELEKTRISCHEN LICHTBOGENERZEUGUNGSVORRICHTUNG UND ENTSPRECHENDE ELEKTRISCHE LICHTBOGENERZEUGUNGSVORRICHTUNG
SPARK-GAP OF AN ELECTRIC ARC GENERATION DEVICE, AND CORRESPONDING ELECTRIC ARC GENERATION DEVICE

(30) Priorité: 19.09.2013 FR 1359030
(43) Date de publication de la demande: 27.07.2016
(73) Titulaire: ENE29 S.àr.l., 2453 Luxembourg (LU)
(72) Inventeur: DELCHAMBRE, Michael, F-31100 Toulouse (FR); LABUDA, Sergei, 31120 Roquettes (FR); ONQUIERT, Guillaume, 31550 Cintegabelle (FR)
(74) Mandataire: Cabinet Plasseraud
(86) Numéro de dépôt international: PCT/IB2014/064594
(87) Numéro de publication internationale: WO 2015/040555

(56) Documents cités:
- EP-A1- 1 037 345
- WO-A1-90/13830
- JP-A- 2007 265 834

## Description

La présente invention concerne un éclateur d'un dispositif de génération d'arc électrique ainsi qu'un dispositif de génération d'arc électrique correspondant.

Un tel dispositif est destiné à venir prendre place dans un puits profond (par exemple plusieurs kilomètres). La génération d'un arc électrique est alors par exemple utilisée pour créer une onde sismique dans le sol ou pour une stimulation de production d'hydrocarbure.

Le document WO-90/13830 illustre un état de la technique du domaine de la présente invention. Il divulgue une source d'ondes sismiques utilisable dans un trou de forage rempli de liquide. Le dispositif décrit dans ce document a pour but de créer des ondes sismiques afin de réaliser par exemple une étude géologique du sol. La source d'ondes sismiques décrite comprend un module soutenu par un câble et contenant un organe destiné à générer une haute tension et à charger une batterie de condensateurs. En provoquant alors une décharge rapide des condensateurs à travers une paire d'électrodes définissant un intervalle de décharge, une onde acoustique est créée. Les électrodes sont immergées dans un liquide, à la même pression que le liquide dans le trou de forage (au niveau des électrodes) et sont séparées par un intervalle de largeur prédéterminée.

Les figures 3 et 4 de ce document de l'art antérieur montrent deux formes de réalisation distinctes d'un éclateur. Selon une première forme de réalisation, une électrode centrale est disposée à égale distance de trois électrodes périphériques en définissant avec chacune d'elles un intervalle de décharge. La seconde forme de réalisation proposée ici comprend deux électrodes similaires mises en regard l'une de l'autre en respectant entre elles un intervalle de décharge.

Un dispositif similaire peut également être utilisé dans un puits de forage pour la stimulation de la production de pétrole. Le document WO-01/59252 décrit ici un dispositif comportant des sources d'énergie pulsées avec, d'une part, un générateur électro-hydraulique qui produit une impulsion électromagnétique et une impulsion acoustique et, d'autre part, un générateur électromagnétique qui produit une impulsion électromagnétique. La forme de réalisation de la figure 8 de ce document illustre un éclateur avec deux électrodes disposées dans une enveloppe flexible remplie de liquide. Chaque électrode est portée par un support d'électrode et des bras métalliques relient les deux supports d'électrode. Ces bras s'étendent parallèlement aux électrodes, à distance de celles-ci.

Dans une structure telle celle illustrée par la figure 8 du document WO-01/59252, lors d'une décharge électrique entre les électrodes, il convient d'éviter qu'une décharge se réalise entre une électrode et un bras métallique. Cette décharge serait alors non contrôlée et l'énergie dissipée par celle-ci est considérée comme étant perdue.

Lorsque l'on souhaite miniaturiser l'éclateur, les bras métalliques qui peuvent être par exemple utilisés pour réaliser un retour de courant, se rapprochent des électrodes et le risque de fuite devient plus important.

Un autre problème technique que l'on rencontre avec les éclateurs de l'art antérieur est l'usure des électrodes. En effet, à chaque décharge électrique, des électrons sont arrachés de l'une des électrodes et une usure de l'extrémité des électrodes est constatée. Au fur et à mesure de l'utilisation de l'éclateur, la distance séparant les deux électrodes augmente, diminuant ainsi les performances du dispositif.

Le document WO-90/13830 propose d'utiliser un matériau réfractaire tel du tungstène pour réaliser les extrémités des électrodes. Le document WO-0159252 décrit le préambule de la revendication 1 et propose alors d'avoir une électrode consommable de type "crayon" avec une électrode centrale consommable et de longueur ajustable (figure 10), ou bien avec un filament (figure 11). Une autre solution proposée par ce dernier document (figure 12) est de faire passer du gaz par une électrode, le gaz s'ionisant sous l'effet de la différence de potentiel entre les électrodes et protégeant ainsi les électrodes.

La présente invention a alors pour but de fournir un éclateur dans lequel des électrodes sont disposées entre des bras métalliques mais pour lequel le risque qu'un arc électrique se développe entre une électrode et un bras est sensiblement réduit par rapport aux dispositifs de l'art antérieur.

Avantageusement, la présente invention permettra de fournir un éclateur de ce type de taille réduite par rapport aux éclateurs connus de l'art antérieur.

Un éclateur selon la présente invention présentera également de préférence une durée de vie prolongée grâce à une usure maîtrisée des électrodes.

À cet effet, la présente invention propose une source d'ondes sismiques avec les caractéristiques de la revendication 1.

Selon la présente invention, la seconde électrode présente en vis-à-vis de la première électrode une surface concave, et le diamètre de la seconde électrode est sensiblement supérieur au diamètre de la première électrode.

De cette manière, si un arc produit entre les électrodes est dévié en direction des bras de liaison qui sont en général métalliques, il peut être attiré par la seconde électrode qui présente une grande surface avec une forme "englobante" qui favorise l'attraction d'un arc électrique.

Dans un éclateur selon la présente invention, on prévoit que le diamètre de la seconde électrode est supérieur au double du diamètre de la première électrode et même avantageusement supérieur au quintuple du diamètre de la première électrode.

Pour que tous points d'une extrémité de la première électrode faisant face à la seconde électrode se trouvent à une même distance de la surface concave de la seconde électrode, la surface concave est avantageusement une surface sensiblement sphérique dont le centre est situé au niveau de l'extrémité libre de la première électrode.

Pour favoriser la création d'un arc entre la première électrode et la seconde électrode, la surface concave présente de préférence au moins une rainure transversale. Ainsi, la surface concave présente au moins une arête vive favorisant l'apparition d'un arc électrique.

Une forme de réalisation préférée de la présente invention, plus facile à mettre en oeuvre industriellement, prévoit que la seconde électrode est réalisée en deux parties, une première partie de forme globalement cylindrique circulaire présentant une extrémité libre en vis-à-vis de la première électrode et une seconde partie tubulaire portant à l'une de ses extrémités la surface concave. Dans cette forme de réalisation préférée, l'extrémité libre de la première partie vient avantageusement prolonger la surface concave de la seconde partie tubulaire. Pour permettre en outre un parfait positionnement de la seconde partie par rapport à la première, la seconde partie de la seconde électrode peut être fixée par exemple sur la première partie de la seconde électrode à l'aide d'au moins une goupille.

Pour éviter encore plus qu'un arc ne se forme entre la première électrode et un bras de liaison (métallique), le diamètre de la seconde électrode est tel qu'un bord périphérique de la seconde électrode se trouve à moins de 2 mm, et de préférence à moins de 0,5 mm, d'un bras de liaison.

La présente invention concerne également une source d'ondes sismiques avec un dispositif de génération d'un arc électrique, caractérisé en ce qu'il présente un éclateur tel que présenté ci-dessus, et en ce que la seconde électrode est reliée à la masse dudit dispositif. Dans un tel dispositif, l'éclateur peut être placé à l'intérieur d'une membrane en matière souple contenant un liquide.

Des détails et avantages de la présente invention apparaitront mieux de la description qui suit, faite en référence au dessin schématique annexé sur lequel :

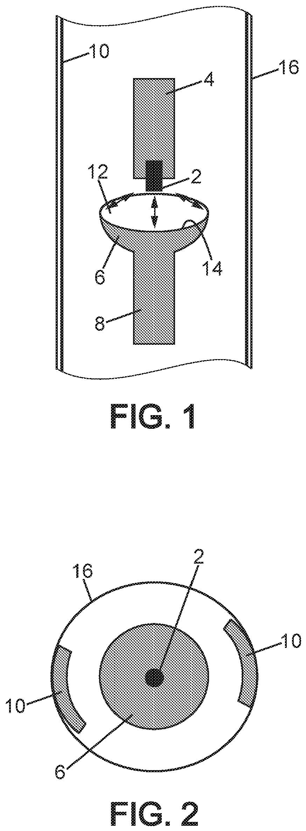

La figure 1 est une vue de principe en élévation d'un éclateur selon la présente invention,
La figure 2 est une vue schématique de dessus correspondant à la figure 1,

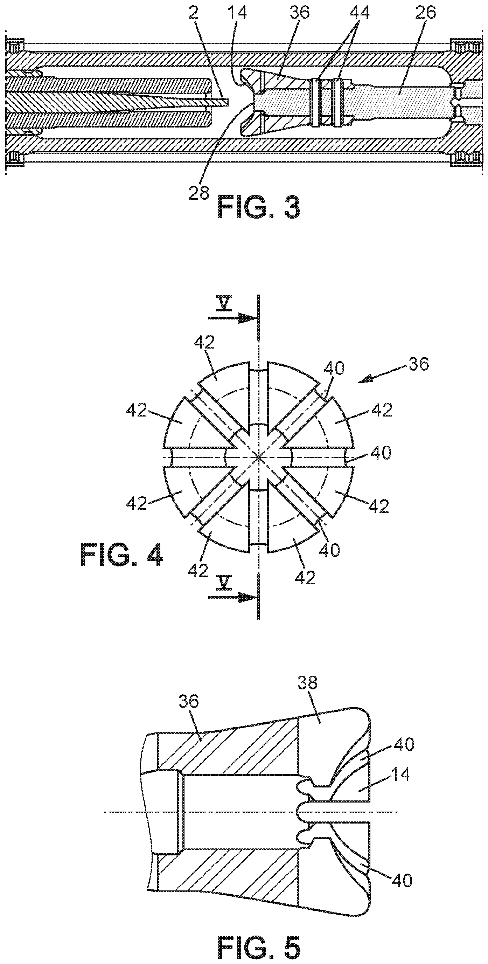

La figure 3 est une vue en coupe longitudinale d'un éclateur selon la présente invention,
La figure 4 est une vue de dessus d'une électrode d'un éclateur selon la présente invention,
La figure 5 est une vue en coupe V-V de la figure 4,

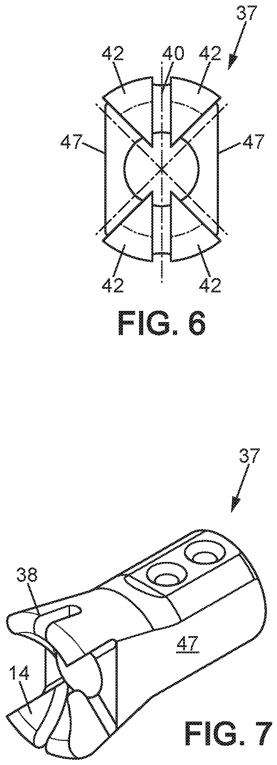

La figure 6 est une vue de dessus correspondant à la figure 4 pour une variante de réalisation,
La figure 7 est une vue en perspective d'une partie de l'élément illustré sur la figure 6, et

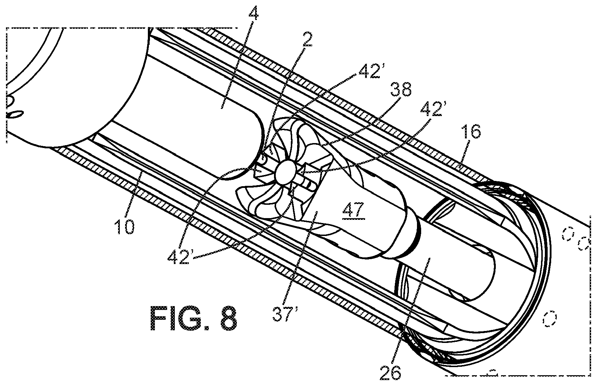

La figure 8 est une vue en perspective d'un éclateur selon une troisième forme de réalisation de la présente invention.

Les figures 1 et 2 illustrent très schématiquement le principe de la présente invention. Sur ces figures, on a représenté un éclateur comportant une première électrode 2 montée sur un premier support 4, une seconde électrode 6 montée sur un second support 8 et des bras de liaison 10 entre le premier support 4 et le second support 8.

La première électrode 2 est une électrode de type connu. Des électrodes décrites dans les documents de l'art antérieur cités au préambule de ce document (WO-90/13830 ou WO-01/59252 par exemple) peuvent être reprises ici. Il s'agit par exemple d'une électrode en forme de tige cylindrique circulaire, éventuellement pourvue d'une pointe à son extrémité libre. Le premier support 4 sert de borne de connexion pour la première électrode 2. Un dispositif électronique de type connu, comprenant généralement une série de condensateurs, permet de mettre la première électrode à un potentiel électrique très élevé en un temps très bref tout en y faisant passer un courant de forte intensité.

La seconde électrode 6 présente une forme particulière destinée à garantir que le courant entrant par la première électrode 2 passe dans la seconde électrode 6 sans fuite vers les bras de liaison 10 par exemple de telle sorte qu'il se forme une zone d'éclatement 12 entièrement comprise entre la première électrode 2 et la seconde électrode 6.

Cette seconde électrode 6 présente à cet effet, d'une part, une surface concave 14 dont la concavité est orientée vers la première électrode 2 et, d'autre part, un diamètre sensiblement supérieur à celui de la première électrode 2. Cette seconde électrode 6 est prévue pour être reliée à la masse.

La surface concave 14 représentée sur la figure 1 est une forme de coupelle qui est de préférence telle que tout point de celle-ci se trouve sensiblement à égale distance de la première électrode 2. Elle présente alors une forme sensiblement sphérique ou bien ellipsoïdale.

La première électrode 2 et la seconde électrode 6 présentent de préférence chacune un axe de symétrie et les deux axes de symétrie sont de préférence confondus en un axe appelé par la suite axe longitudinal, comme illustré par la figure 2. On remarque sur cette vue de dessus que la première électrode 2 est centrée par rapport à la seconde électrode 6. On remarque plus généralement que l'éclateur est sensiblement symétrique par rapport à l'axe de symétrie des électrodes. Les bras de liaison 10 sont disposés symétriquement par rapport aux deux électrodes. La forme de réalisation prévoit deux bras mais on pourrait avoir un seul, trois (ou tout autre nombre raisonnable) bras de liaison 10.

Les figures 1 et 2 illustrent également une membrane souple 16 qui permet de former une enceinte au sein de laquelle se trouve l'éclateur et qui est destinée à être remplie d'un fluide diélectrique. Lorsqu'une onde est produite par une décharge entre les électrodes, l'onde se propage dans le fluide au sein de l'enceinte puis est transmise par la membrane souple 16 au fluide extérieur (du pétrole, de la boue, de l'eau ou autre) dans lequel le dispositif est immergé.

La génération d'un arc électrique peut être alors utilisée pour créer une onde sismique dans le sol pour réaliser par exemple une étude géologique dudit sol ou de fonds sous-marin. Dans un autre exemple, l'onde sismique créée peut être utilisée pour une stimulation de production d'hydrocarbure.

La figure 3 illustre une forme de réalisation de la présente invention en coupe longitudinale. Les références utilisées sur les figures 1 et 2 sont reprises ici et sur les figures suivantes pour désigner des pièces similaires.

On retrouve sur la figure 3 la structure décrite plus haut en référence aux figures 1 et 2 mais plus de détails sont donnés sur la figure 3.

On remarque ainsi notamment sur la figure 3 que la seconde électrode est réalisée en deux parties, une partie centrale 26 et une corolle 36 montée sur une extrémité de la partie centrale 26.

La partie centrale 26 se présente sous la forme d'une tige cylindrique circulaire. Elle est alignée avec la première électrode 2 et présente une extrémité transversale 28 face à cette première électrode 2. L'extrémité transversale 28 s'étend perpendiculairement à l'axe longitudinal de l'éclateur et présente par exemple une forme circulaire.

La corolle 36 est représentée à échelle agrandie sur les figures 4 et 5. Comme il ressort de ces figures, la corolle 36 se présente sous la forme d'une douille qui présente à l'intérieur un logement intérieur pour recevoir l'extrémité libre de la partie centrale 26 et à l'extérieur une surface qui s'évase définissant ainsi une extrémité évasée 38 destinée à faire face à la première électrode 2.

L'extrémité évasée 38 porte la surface concave 14. Cette surface est de forme sphérique. Plus précisément, la surface concave 14 est formée de secteurs sphériques. Tout d'abord, comme déjà indiqué, la corolle 36 se présente sous la forme d'une douille et est donc évidée en son centre. Il est prévu ici que le centre évidé de la surface concave 14 vienne recevoir l'extrémité transversale 28 de la partie centrale 26. Le logement réalisé dans la corolle 36 est usiné de telle sorte que la surface frontale formée par l'extrémité transversale vienne affleurer avec la surface concave 14 formée à l'intérieur de la partie évasée 38 de la corolle 36. Ensuite, on remarque que la partie évasée 38 présente des rainures 40 qui, dans la forme de réalisation des figures 4 et 5, sont au nombre de quatre divisant ainsi la surface concave 14 en huit secteurs 42 régulièrement répartis autour de l'axe longitudinal. Les rainures 40 s'étendent chacune dans un plan contenant l'axe longitudinal et sont décalées à chaque fois de 45°.

Pour assurer une bonne liaison entre la partie centrale 26 et la corolle 36 et garantir un bon positionnement relatif de ces deux pièces, il est proposé dans un mode de réalisation préféré, mais non limitatif, de fixer la corolle 36 par l'intermédiaire de goupilles 44.

Le diamètre extérieur de la corolle 36 est de préférence au moins le double du diamètre extérieur de la première électrode 2. Dans un mode de réalisation préféré, il est même de l'ordre de 10 fois plus grand que le diamètre de la première électrode 2. La corolle 36 s'étend de préférence jusqu'aux bras de liaison 10 sans toutefois entrer en contact avec eux. On peut par exemple prévoir entre la corolle 36 et chaque bras de liaison 10 un interstice de quelques dixièmes de millimètres à quelques millimètres, par exemple entre 0,1 mm et 2 mm. Toujours à titre purement illustratif et non limitatif, on peut par exemple avoir un diamètre de première électrode 2 de l'ordre de 4 à 5 mm et une corolle 36 présentant une partie évasée dont le diamètre est d'environ 40 à 50 mm. Le rayon de courbure de la surface concave 14, correspondant sensiblement à la distance séparant les deux électrodes peut être par exemple compris entre 15 et 20 mm.

Les figures 6 et 7 illustrent une nouvelle corolle 37 qui est une variante de réalisation de la corolle 36 des figures 3 à 5. La forme globale de la corolle 37 reprend celle de la corolle 36 avec toutefois deux méplats 47 parallèles disposés symétriquement par rapport à l'axe longitudinal (dans la position montée de la corolle). La corolle 37 présente ainsi selon une direction transversale une longueur et selon une autre direction transversale perpendiculaire à la première une largeur moindre par rapport à la longueur. Dans cette forme de réalisation, la surface concave 14 présente alors uniquement quatre secteurs 42 et une rainure 40 centrale s'étendant dans la longueur de la corolle 37.

Cette forme de réalisation est adaptée à un éclateur avec deux bras de liaison 10. La corolle 37 est alors alignée avec les bras de liaison 10 de manière à ce que les secteurs 42 viennent au plus près des bras de liaison 10.

La figure 8 illustre une troisième forme de réalisation d'une corolle 37' très proche de la forme de réalisation des figures 6 et 7. On retrouve ainsi sur la figure 8 pour la corolle 37' la forme générale de la corolle 37, avec des méplats 47. Au niveau de la partie évasée 38 de la corolle 37', la surface concave présente quatre secteurs 42 mais aussi quatre autres secteurs 42' de dimensions réduites par rapport aux secteurs 42.

La figure 8 illustre un éclateur selon l'invention en perspective avec une coupe de la membrane souple 16 de manière à permettre de visualiser l'intérieur de l'éclateur et notamment ses électrodes.

Dans ses différentes formes de réalisation décrites ci-dessus et dans les variantes à la portée de l'homme du métier, on a une seconde électrode présentant une surface en vis-à-vis de la première électrode bien plus importante que dans les dispositifs comparables de l'art antérieur. De préférence, les différents points de la surface concave 14 se trouvent sensiblement à une même distance de la première électrode 2. De cette manière, il est possible d'avoir une consommation de matière au niveau de la seconde électrode, qui est reliée à la masse, s'effectuant régulièrement sur toute la surface concave 14. En effet, une décharge électrique entre deux électrodes emprunte généralement un chemin, appelé chemin de décharge, le plus court possible, reliant donc les deux points les plus proches des deux électrodes. Lorsque la forme de la surface concave est telle que tous les points de cette surface sont sensiblement à une même distance de la seconde électrode, une décharge électrique entre les électrodes peut alors emprunter une multitude de chemins de décharge qui sont répartis sur la seconde électrode. L'usure étant répartie sur une plus grande surface, la distance entre la première électrode et la seconde électrode diminue bien moins rapidement que dans les formes de réalisation connues de l'art antérieur. On arrive ainsi à maintenir bien plus longtemps un espacement optimal entre les deux électrodes de l'éclateur.

Les formes de réalisation de l'invention permettent d'éviter une génération d'arc électrique entre la première électrode, destinée à être reliée à une source haute tension, et les bras de liaison métalliques utilisés comme support pour maintenir la structure de l'éclateur. En effet, la forme de coupelle donnée à la seconde électrode lui permet de venir intercepter un arc qui ne se propage pas longitudinalement.

De manière préférée, la surface concave est divisée en plusieurs secteurs. On réalise de la sorte des arêtes vives qui permettent de faciliter le déclenchement d'une génération d'arc électrique. Cette caractéristique permet d'éviter encore mieux qu'un arc ne se dirige vers les bras de liaison.

La présente invention fournit ainsi des moyens permettant de limiter les risques de fuite d'un arc vers un bras de liaison. Elle permet par là de miniaturiser un éclateur présentant une telle structure, c'est-à-dire avec des bras de liaison.

Les formes de réalisation dans lesquelles la seconde électrode présente des méplats permettent de faciliter la propagation de l'onde de choc en dehors de la zone d'éclatement (ou de génération d'arc électrique).

Bien entendu, le fait d'avoir une électrode reliée à la masse en deux parties correspond à une forme de réalisation préférée de l'invention mais on pourrait très bien avoir, sans sortir du cadre de la présente invention, une électrode massive ou bien au contraire une électrode en plusieurs parties, par exemple autant de parties que, dans la forme illustrée, la surface concave compte de secteurs et/ou de "mini" secteurs.

La présente invention ne se limite pas aux formes de réalisation décrites ci-dessus à titre d'exemples non limitatifs et représentées au dessin et aux variantes évoquées mais elle concerne toute forme de réalisation à la portée de l'homme du métier dans le cadre des revendications ci-après.

## Revendications

1. Source d'ondes sismiques comportant un dispositif de génération d'arc électrique pour créer une onde sismique présentant un éclateur avec :
- une première électrode (2) associée à un premier support (4) d'électrode,
- une seconde électrode (6) associée à un second support (8) d'électrode et de diamètre sensiblement supérieur au diamètre de la première électrode (2), et
- au moins un bras de liaison (10) métallique reliant le premier support (4) d'électrode au second support (8) d'électrode,
**caractérisée en ce que**
la seconde électrode (6) présente en vis-à-vis de la première électrode (2) une surface concave (14) avec au moins une rainure transversale (40).

2. Source d'ondes sismiques selon la revendication 1, **caractérisée en ce que** le diamètre de la seconde électrode (6) est supérieur au double du diamètre de la première électrode (2).

3. Source d'ondes sismiques selon l'une des revendications 1 ou 2, **caractérisée en ce que** la surface concave (14) est une surface sensiblement sphérique dont le centre est situé au niveau d'une extrémité libre de la première électrode (2).

4. Source d'ondes sismiques selon l'une des revendications 1 à 3, **caractérisée en ce que** la seconde électrode (6) est réalisée en deux parties, une première partie (26) de forme globalement cylindrique circulaire présentant une extrémité libre en vis-à-vis de la première électrode (2) et une seconde partie (36 ; 37 ; 37') tubulaire portant à l'une de ses extrémités la surface concave (14).

5. Source d'ondes sismiques selon la revendication 4, **caractérisée en ce que** l'extrémité libre de la première partie (26) vient prolonger la surface concave (14) de la seconde partie tubulaire (36 ; 37 ; 37').

6. Source d'ondes sismiques selon l'une des revendications 4 ou 5, **caractérisé en ce que** la seconde partie (36 ; 37 ; 37') de la seconde électrode (6) est fixée sur la première partie (26) de la seconde électrode (6) à l'aide d'au moins une goupille (44).

7. Source d'ondes sismiques selon l'une des revendications 1 à 6, **caractérisée en ce que** le diamètre de la seconde électrode (6) est tel qu'un bord périphérique de la seconde électrode se trouve à moins de 2 mm, et de préférence à moins de 0,5 mm, d'un bras de liaison (10).

8. Source d'ondes sismiques selon l'une des revendications 1 à 7, **caractérisée en ce que** la seconde électrode (6) est reliée à une masse du dispositif de génération d'arc électrique.

9. Source d'ondes sismiques selon l'une des revendications 1 à 8, **caractérisée en ce que** l'éclateur est placé à l'intérieur d'une membrane (16) en matière souple contenant un liquide.

## Patentansprüche

1. Erdbebenwellenquelle, umfassend eine Lichtbogenerzeugungsvorrichtung zum Bilden einer Erdbebenwelle, die eine Funkenstrecke mit Folgendem aufweist:
- einer ersten Elektrode (2), die einer ersten Elektrodenhalterung (4) zugeordnet ist,
- einer zweiten Elektrode (6), die einer zweiten Elektrodenhalterung (8) zugeordnet ist, und die einen Durchmesser aufweist, der wesentlich größer ist als der Durchmesser der ersten Elektrode (2), und
- wenigstens einem metallischen Verbindungsarm (10), der die erste Elektrodenhalterung (4) mit der zweiten Elektrodenhalterung (8) verbindet,
**dadurch gekennzeichnet, dass**
die zweite Elektrode (6) gegenüber der ersten Elektrode (2) eine konkave Oberfläche (14) mit wenigstens einer Quernut (40) aufweist.

2. Erdbebenwellenquelle nach Anspruch 1, **dadurch gekennzeichnet, dass** der Durchmesser der zweiten Elektrode (6) mehr als das Doppelte des Durchmessers der ersten Elektrode (2) beträgt.

3. Erdbebenwellenquelle nach einem der Ansprüche 1 oder 2, **dadurch gekennzeichnet, dass** die konkave Oberfläche (14) eine im Wesentlichen sphärische Oberfläche ist, deren Mittelpunkt sich auf der Höhe eines freien Endes der ersten Elektrode (2) befindet.

4. Erdbebenwellenquelle nach einem der Ansprüche 1 bis 3, **dadurch gekennzeichnet, dass** die zweite Elektrode (6) aus zwei Teilen gebildet ist, einem ersten Teil (26) von allgemein kreiszylindrischer Form, der ein freies Ende gegenüber der ersten Elektrode (2) aufweist, und einem rohrförmigen zweiten Teil (36; 37; 37'), der an einem seiner Enden die konkave Oberfläche (14) trägt.

5. Erdbebenwellenquelle nach Anspruch 4, **dadurch gekennzeichnet, dass** das freie Ende des ersten Teils (26) die konkave Oberfläche (14) des rohrförmigen zweiten Teils (36; 37; 37') verlängert.

6. Erdbebenwellenquelle nach einem der Ansprüche 4 oder 5, **dadurch gekennzeichnet, dass** der zweite Teil (36; 37; 37') der zweiten Elektrode (6) mithilfe von wenigstens einem Stift (44) am ersten Teil (26) der zweiten Elektrode (6) befestigt ist.

7. Erdbebenwellenquelle nach einem der Ansprüche 1 bis 6, **dadurch gekennzeichnet, dass** der Durchmesser der zweiten Elektrode (6) derart ist, dass ein Umfangsrand der zweiten Elektrode sich weniger als 2 mm und vorzugsweise weniger als 0,5 mm von einem Verbindungsarm (10) entfernt befindet.

8. Erdbebenwellenquelle nach einem der Ansprüche 1 bis 7, **dadurch gekennzeichnet, dass** die zweite Elektrode (6) mit einer Masse der Lichtbogenerzeugungsvorrichtung verbunden ist.

9. Erdbebenwellenquelle nach einem der Ansprüche 1 bis 8, **dadurch gekennzeichnet, dass** die Funkenstrecke im Inneren einer Membran (16) aus biegsamem Material angeordnet ist, die eine Flüssigkeit enthält.

## Claims

1. Source of seismic waves comprising an electric arc generation device for creating a seismic wave having a spark-gap with:
- a first electrode (2) connected to a first electrode mounting (4),
- a second electrode (6) connected to a second electrode mounting (8) and having a diameter that is substantially greater than the diameter of the first electrode (2), and
- at least one connection metal arm (10) connecting the first electrode mounting (4) to the second electrode mounting (8),
**characterised in that** the second electrode (6) has a concave surface (14) facing the first electrode (2) with at least one transverse groove (40).

2. Source of seismic waves according to claim 1, **characterised in that** the diameter of the second electrode (6) is more than twice the diameter of the first electrode (2).

3. Source of seismic waves according to one of claims 1 or 2, **characterised in that** the concave surface (14) is a substantially spherical surface having its center located at a free end of the first electrode (2).

4. Source of seismic waves according to one of claims 1 to 3, **characterised in that** the second electrode (6) is made of two parts: a first portion (26) of generally circular cylindrical shape having a free end facing the first electrode (2), and a second tubular portion (36; 37; 37') bearing the concave surface (14) at one of its ends.

5. Source of seismic waves according to claim 4, **characterised in that** the free end of the first portion (26) extends the concave surface (14) of the second tubular portion (36; 37; 37').

6. Source of seismic waves according to one of claims 4 or 5, **characterised in that** the second portion (36; 37; 37') of the second electrode (6) is fixed to the first portion (26) of the second electrode (6) by means of at least one pin (44).

7. Source of seismic waves according to one of claims 1 to 6, **characterised in that** the diameter of the second electrode (6) is such that a peripheral edge of the second electrode is less than 2 mm, and preferably less than 0.5 mm, from a connection arm (10).

8. Source of seismic waves according to one of claims 1 to 7, **characterised in that** the second electrode (6) is connected to the ground of the electric arc generation device.

9. Source of seismic waves according to one of claims 1-8, **characterised in that** the spark gap is placed inside a membrane (16) of flexible material containing a liquid.
